# EUROPÄISCHE PATENTSCHRIFT

(11) **EP 1 502 683 B1**
(45) Veröffentlichungstag und Bekanntmachung des Hinweises auf die Patenterteilung: **19.09.2007**
(21) Anmeldenummer: 04016537.5
(22) Anmeldetag: 14.07.2004
(51) Int. Cl.: B23D 15/14

(54) **Pyrotechnisch angetriebene Trennvorrichtung zum Trennen von massiven, kompakten Materialien**
Pyrotechnically driven severing device for severing massive, compact materials
Dispositif de découpe de matériaux massifs et compacts à entraînement pyrotechnique

(30) Priorität: 29.07.2003 DE 10334890; 12.05.2004 DE 102004023415
(43) Veröffentlichungstag der Anmeldung: 02.02.2005
(73) Patentinhaber: Delphi Technologies, Inc., Troy, MI 48007 (US)
(72) Erfinder: Knauss, Jürgen, 90587 Obermichelbach (DE); Brede, Uwe, 90765 Fuerth (DE); Von Behr, Diedrich, 91054 Erlangen (DE)
(74) Vertreter: Manitz, Gerhart

(56) Entgegenhaltungen:
- DE-A- 4 242 014
- DE-A- 19 732 650
- DE-C- 3 818 669
- DE-C- 4 438 157
- US-A- 4 457 204

## Beschreibung

Die Erfindung betrifft eine pyrotechnische Trennvorrichtung nach dem Oberbegriff des Anspruchs 1.

Bekannt sind pyrotechnische Trennvorrichtungen bei denen mit Erzeugung eines Gasdruckimpulses durch Verbrennung von pyrotechnischem Material ein Trennwerkzeug angetrieben wird, um verschiedene Materialien wie z. B. Seile, Drähte, Stromschienen oder Kunststoffstäbe für die unterschiedlichsten Zwecke zu trennen.

Beispielsweise wird eine derartige Trennvorrichtung als "Seiltrennvorrichtung" in der DE 38 18 669 C1 beschrieben. Hier wird ein anfangs arretierter Trennmeißel mit Erzeugung des pyrotechnischen Druckimpulses über eine kleine Freiflugstrecke beschleunigt, um nach Aufnahme kinetischer Energie das Seil oder einen Draht zu durchschneiden.

Andere Schriften "Pyrotechnische Trennvorrichtung" DE 44 38 157 C1 oder "Leistungstrenner" DE 197 32 650 A1 beschreiben "freifliegende Trennwerkzeuge" ohne Arretierung, die nur mit der Anfangsreibung und der Masse eine gewisse Verdämmung für den Antriebsdruckimpuls darstellen. Aber auch diese Einrichtungen eignen sich für das Trennen von Materialien unterschiedlichster Form und Zwecke. Nachteilig stellt sich bei den bekannten Lösungen jedoch dar, wenn aus technischen und aus Kostengründen mechanisch gering belastbare isolierende Materialen für die Trennwerkzeuge zur Anwendung kommen, wie z.B. in Spritzgießtechnik hergestellte Kunststoffteile. Wenn das Trennwerkzeug nämlich selbst eine hohe Geschwindigkeit besitzt, mit der die eigentliche Wirkungsschneide oder Fläche des Trennmeißels auf das zu trennende Medium trifft, erfährt es auf Grund der mechanischen Wechselwirkung zwischen Wirkungsschneide und zu durchtrennendes Material hohe unkontrollierte Querbeschleunigungen und Prellungen, was vor allem die Verwendung von kostengünstigen Kunststoffen als Trennwerkzeugmaterial außerordentlich erschwert, ja zum Teil unmöglich macht. Ebenfalls müssen die Toleranzen der Werkzeugführungselemente sehr eng sein, was nicht preiswert herzustellen ist.

Der Erfindung liegt die Aufgabe zu Grunde, eine pyrotechnische Trennvorrichtung nach dem Oberbegriff des Anspruchs 1 so weiter zu entwickeln, dass die aus einem Freiflug des Trennwerkzeuges resultierenden Probleme vermieden werden, der kostengünstige Einsatz von Kunststoffen in der Trennvorrichtung möglich ist und ein für verschiedene zu trennende Materialien auch an unterschiedlichen Geometrien anpassbarer Druckimpulsgenerator bei gleichem Bauraum in ein und demselben Gerät realisierbar ist.

Erfindungsgemäß wird diese Aufgabe durch die Merkmale des Anspruchs 1 gelöst.

Durch die erfindungsgemäße Schlagkapsel und das Anliegen des Trennwerkzeuges mit seinem Trennmeißel an der Trennstelle vor Auftreffen der Schlagkapsel auf den Stoßboden sind die aus einem Freiflug des Trennwerkzeuges resultierenden Probleme vermieden, außerdem ist der kostengünstige Einsatz von Kunststoffen in der Trennvorrichtung möglich, da unkontrollierte Querbeschleunigurigen und Prellungen des Trennwerkzeuges nicht auftreten. Ferner ist die Trennleistung verbessert, so dass ein für verschiedene zu trennende Materialien auch unterschiedlicher Geometrien anpassbarer Druckimpulsgenerator bei gleichem Bauraum in ein und demselben Gerät realisierbar ist.

In bevorzugter Ausführungsform ist das zu trennende Material U-förmig ausgebildet und die Schlagkapsel innerhalb des am zu trennenden Material anliegenden Trennwerkzeuges mit Abstand zum Stoßboden angeordnet.

Bevorzugt liegt die Schlagkapsel mit ihrer äußeren Umfangswandung an der inneren Umfangswandung des Trennwerkzeuges verschiebbar an. Durch diese ineinandergeschobene Anordnung ist eine gute Führung der Schlagkapsel bei kleinstem Bauvolumen erreicht. Bevorzugt sind die offenen Enden der Schlagkapsel und des Trennwerkzeuges bündig zueinander angeordnet, bzw. befinden sich in Längsrichtung der Trennvorrichtung gesehen auf derselben Höhe.

In erfindungsgemäßer vorteilhaften Ausführungsform ist zwischen dem Stoßboden des Trennwerkzeuges und der Schlagkapsel ein Kompressionsvolumen angeordnet.

Ferner umgreifen bevorzugt die Schlagkapsel und das Trennwerkzeug den Druckimpulsgenerator, wobei zwischen dem Druckimpulsgenerator und der Schlagkapsel ein Antriebsvolumen angeordnet ist. Die offenen Enden des Trennwerkzeuges und der Schlagkapsel liegen bevorzugt an einer Auskragung des Druckimpulsgenerators an.

In bevorzugter Ausführungsform besitzt die Schlagkapsel an ihrem offenen Ende auf der äußeren Umfangswand eine umlaufende Aufweitung oder zwei oder mehrere nach Außen umgebogene Arretierungszungen und das Trennwerkzeug weist am offenen Ende innen, d.h. auf der inneren Umfangswand eine entsprechend der Aufweitung oder der Arretierungszungen geformte umlaufende Phase auf. In diese umlaufende Phase greift die Aufweitung oder greifen die umgebogenen Arretierungszungen der Schlagkapsel ein. Dies hat den Vorteil, dass in jedem Fall nach der Zündung des Druckimpulsgenerators und vor Auftreffen der Schlagkapsel auf den inneren Stoßboden des Trennwerkzeuges die beschleunigte Schlagkapsel das Trennwerkzeug mitzieht - falls es nicht schon an der Trennstelle anliegt -, bis das Trennwerkzeug an der Trennstelle anliegt. Erst dann lösen sich die Aufweitung oder die Arretierungszungen aus der umlaufenden Phase und die Schlagkapsel prallt auf den inneren Stoßboden des Trennwerkzeuges auf.

Aus Kostengründen bestehen das Trennwerkzeug, die Schlagkapsel und das Führungsgehäuse bevorzugt aus glasfaserverstärktem Kunststoff.

Vorteilhafterweise liegt das Massenverhältnis der Schlagkapsel zum Trennwerkzeug bei ca. 1:3 und/oder das Volumenverhältnis des Antriebsvolumens zum Kompressionsvolumen bei ca. 1:3.

In weiterer vorteilhafter Ausführungsform ist auf dem Stoßboden ein pyrotechnisches Druckimpulsverstärkungselement in der Art einer pyrotechnischen Verstärkungsladung aufgebracht, wobei im Druckimpulsverstärkungselement eine Zündeinrichtung, bevorzugt eine Zündstoffpille angeordnet sein kann.

Zur besseren Zündung des Druckimpulsverstärkungselements oder der Zündeinrichtung weist die Schlagkapsel an der zum Druckimpulsverstärkungselement oder der Zündeinrichtung gewandten Seite vorteilhaft einen Schlagbolzen auf.

In bevorzugter Ausführungsform ist das zu durchtrennende Teil eine Stromschiene und wird die Trennvorrichtung in einer Batterieabschaltung bevorzugt in einem Kraftfahrzeug verwendet.

Nachfolgend wird die Erfindung an Hand von Figuren näher erläutert.

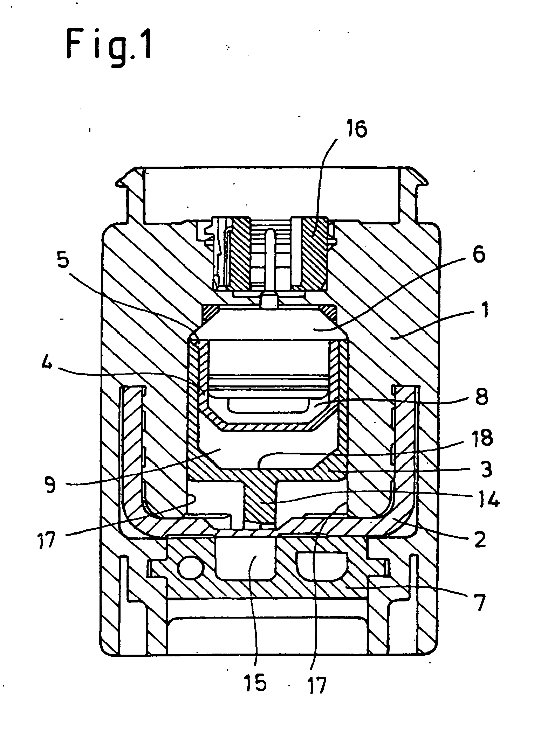

Figur 1 zeigt ein Trennwerkzeug 3 aus mit Glasfasern verstärktem Kunststoff, welches in einer zylindrischen Führung 17 eines Führungsgehäuses 1 geführt ist, das ebenfalls aus mit Glasfasern verstärktem Kunststoff geformt ist. Das Trennwerkzeug 3 besitzt an seinem zu einem zu durchtrennenden Material 2 gewandten Ende einen Trennmeißel 14, der an einer Trennstelle des zu durchtrennenden Materials 2 anliegt. In dieser Ausführungsform ist das zu durchtrennende Material 2 eine Stromschiene. Eingeklemmt ist das zu durchtrennende Material 2 durch ein Gegenlager 7, welches in das Führungsgehäuse 1 eingeschoben und verklemmt ist.

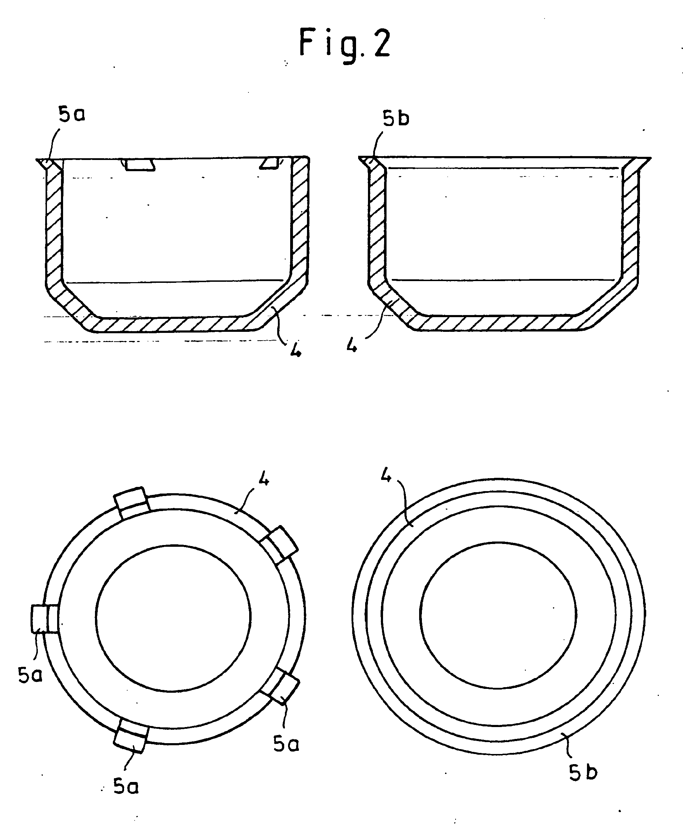

Über einen Druckimpulsgenerator 6, der ebenfalls in der zylindrischen Führung 17 des Führungsgehäuses 1 angeordnet ist, ist eine Schlagkapsel 4 geschoben, die wie das Trennwerkzeug 3 im Schnitt U-förmig ausgebildet ist und die an ihrer offenen Seite eine umlaufende Aufweitung 5b oder zwei bzw. mehrere (z.B. bevorzugt 2 bis 5) umgebogene Arretierungszungen 5a besitzt (siehe Fig. 2). Das Trennwerkzeug 3 besitzt am offenen Ende innen, d.h. auf der inneren Umfangswandung eine entsprechend der radialen Länge und/oder dem Winkel der Arretierungszungen 5 oder der Aufweitung 5b der Schlagkapsel 4 geformte umlaufende Phase. Die Schlagkapsel 4 liegt dabei mit ihrer äußeren Umfangswandung an der inneren Umfangswandung des Trennwerkzeuges 3 verschiebbar an. Hierdurch ist eine gute Führung der Schlagkapsel bei kleinstem Bauvolumen erreicht. Gezündet wird der Druckimpulsgenerator 6 elektrisch, wobei die elektrische Zuleitung über einen Stecker 16 am Führungsgehäuse 1 erfolgt.

Das auf das zu durchtrennende Material 2, hier die Stromschiene aufgesetzte Trennwerkzeug 3 bildet mit der Schlagkapsel 4, dem Druckimpulsgenerator 6, dem Führungsgehäuse 1 und dem Gegenlager 7 eine Funktionseinheit.

### Funktionsbeschreibung:

Wird der Druckimpulsgenerator 6 ausgelöst - z.B. durch einen elektrischen Stromimpuls vom Crashsensor eines Pkws, entsteht durch chemische Reaktion des pyrotechnischen Materials in dem Druckimpulsgenerator ein Gasdruck, der sich im Antriebsvolumen 8 ausbreitet und der Schlagkapsel 4 einen entsprechend dem Druck und der Wirkungsfläche resultierenden Kraftstoß vermittelt. Überschreitet dieser Kraftstoß die Haltekraft der Arretierungszungen 5a oder der Aufweitung 5b, bewegt sich die Schlagkapsel 4 mit hoher Anfangsbeschleunigung auf den inneren Stoßboden des Trennwerkzeuges 3 zu. Während des Lösevorganges der Schlagkapsel 4 üben die noch nicht vollständig zurückgebogenen Arretierungszungen 5a oder die Aufweitung 5b eine Schubkraft auf das Trennwerkzeug 3 über dessen rohrförmige Hülse aus. Mit dieser Funktion wird ein eventuell vorhandenes, nicht erwünschtes Spiel zwischen Trennwerkzeug 3 und zu durchtrennendes Material 2 bzw. der Stromschiene herausgenommen.

Während die Schlagkapsel 4 sich dem inneren Stoßboden des Trennwerkzeuges 3 mit hoher Geschwindigkeit (durchaus bis > 100 m/s) nähert, steigt in Folge der Kompression der Druck im Kompressionsvolumen 9 bei gleichzeitiger Erhitzung stark an.

Wenn dieser Vorgang der Bewegung der Schlagkapsel 4 sehr schnell abläuft, können nahezu adiabatische Kompressionsverhältnisse angenommen werden. Daraus resultiert, dass der größte Teil der Energie der Schlagkapsel 4 auf das Trennwerkzeug 3 ohne Prellen übertragen wird. Der damit übertragene Kraftstoß treibt das Trennwerkzeug 3 an und schert die Stromschiene 2 an der Trennstelle durch und biegt sie in einen Aufnahmeraum 15 um.

Es hat sich mit der erfindungsgemäßen Trennvorrichtung in vorteilhafter Weise gezeigt, dass mit Abstimmung des Massenverhältnisses der Schlagkapsel 4 und des Trennwerkzeuges 3 von 1:3 und dem Volumenverhältnis des Antriebsvolumens 8 und des Kompressionsvolumens 9 von 1:3 eine absolut sichere Trennung des zu trennenden Materials 2 bzw. der Stromschiene gewährleistet ist, ohne das Führungsgehäuse 1 zu zerstören. Ein wesentliches Merkmal der Funktion der Trennvorrichtung und der Anpassbarkeit an die verschiedensten Trennaufgaben bzw. Trennmaterialien ist die Gestaltung der Arretierungszungen 5a bzw. der Aufweitung 5b.

Ein erfinderisches Ziel war auch, selbst bei großen Lademengenschwankungen im Druckimpulsgenerators 6 einwandfreie Trennungen des zu trennenden Materials 2 zu erhalten, ohne das Gerät bzw. das Führungsgehäuse 1 zu zerstören. Ein wesentlicher Kostenfaktor liegt nämlich auch in der Dosiergenauigkeit der pyrotechnischen Lademenge im Druckimpulsgenerator 6. Je größer eine erlaubte Schwankung sein darf, desto niedriger sind die Kosten des Druckimpulsgenerators 6 bzw. dessen Herstellung. Die obere Grenze sollte nur noch von der Gehäusefestigkeit des Führungsgehäuses 1 bestimmt sein. Die Arretierungszungen 5a bzw. die Aufweitung 5b sorgen dafür, dass die Schlagkapsel 4 erst nach Zurückbiegen der Arretierungszungen 5a bzw. der Aufweitung 5b beschleunigt werden kann. Daraus resultiert, dass bei niedrigen pyrotechnischen Ladungen lediglich etwas längere Zeit benötigt wird, um die Schlagkapsel 4 zu beschleunigen. Bei höheren Ladungen im Druckimpulsgenerator 6 läuft diese Anlaufphase schneller ab. Es konnte ermittelt werden, dass einwandfreie Trennungen ohne Gehäusezerstörungen bei Lademengenschwankungen bis ± 30% der mittleren Ladung erfolgen.

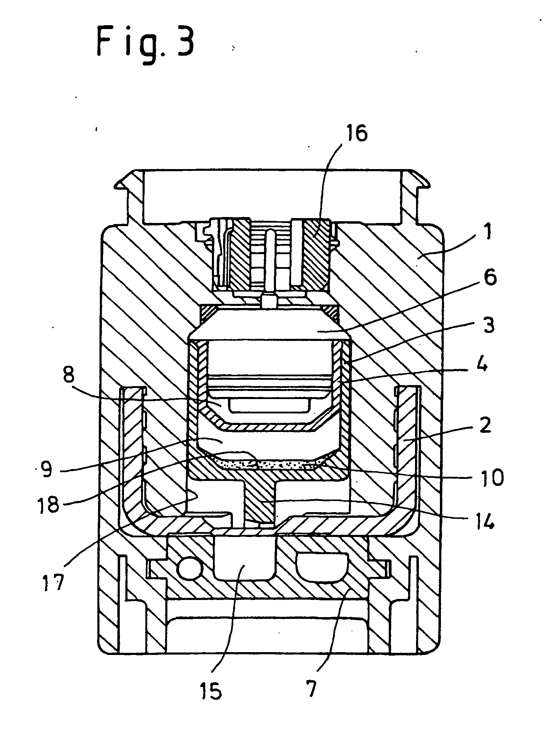

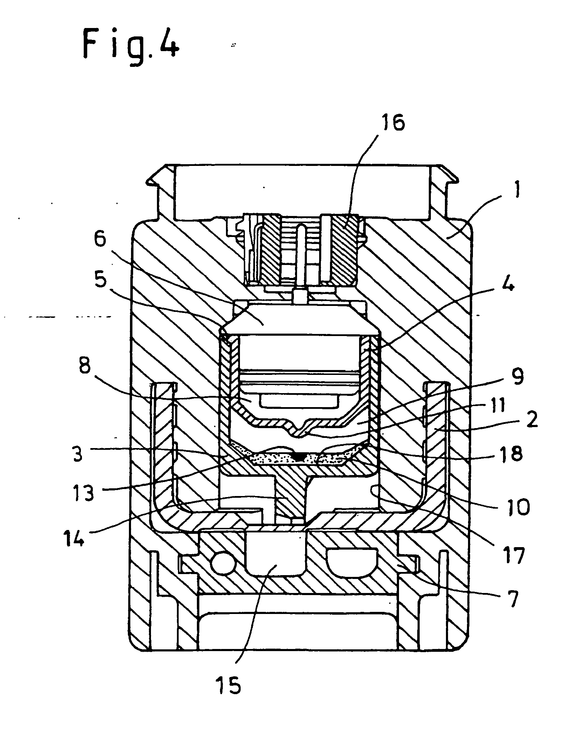

Eine weitere Ausgestaltung der erfindungsgemäßen pyrotechnischen Trennvorrichtung ist durch die Anordnung eines pyrotechnischen Druckimpulsverstärkungselementes 10 auf dem Stoßboden des Trennwerkzeuges 3 realisiert. Die Figuren 3 und 4 zeigen zwei unterschiedliche Ausführungen. Fig. 3 zeigt die Anordnung eines pyrotechnischen Druckimpulsverstärkungselementes 10 ohne zusätzliche Zündeinrichtung.

Fig. 4 dagegen zeigt eine Zündstoffpille 13 als Zündeinrichtung, die in das Druckimpulsverstärkungselement 10 integriert ist. Zusätzlich weist die Schlagkapsel 4 an ihrem zum Stoßboden bzw. zum Druckimpulsverstärkungselement 10 gewandten Ende eine mechanische Schlagzündanordnung in Form eines Schlagbolzens 11 auf.

Wenn mehr Leistung benötigt wird und der Druckimpulsgenerator 6 an seiner oberen Leistungsgrenze ist, ermöglicht es das Druckimpulsverstärkungselement 10 in der gleichen Trennvorrichtung ohne zusätzliche Armierungen oder Festigkeitserhöhungsmaßnahmen auch dickere zu durchtrennende Materialien 2 zu durchtrennen.

Die Funktion des in Fig. 3 angeordneten Druckimpulsverstärkungselementes 10 ist wie folgt:

Bei der Beschleunigung der Schlagkapsel 4 hin zum Stoßboden des Trennwerkzeuges 3 wird die Luft im Kompressionsvolumen 9 derartig erhitzt, dass das pyrotechnische Material im Druckimpulsverstärkungselement 10 gezündet wird. Dies ist in der DE 42 42 014 A1 ausführlich beschrieben. Vorzugsweise wird ein saugfähiges poröses Trägermaterial mit pyrotechnischem Material, wie z.B. ein Gassatz für Airbags, getränkt. Die Menge ist der Trennaufgabe anzupassen und sollte aber nicht mehr als 20% des Kompressionsvolumens 9 ausfüllen.

Fig. 4 zeigt eine mechanische Zusatzzündeinrichtung in Form einer Zündstoffpille 13 im Druckimpulsverstärkungselement 10. Sie ist notwendig, wenn das pyrotechnische Material, welches das Druckimpulsverstärkungselement 10 darstellt, eine sehr hohe Zündtemperatur bzw. höhere Zündenergien benötigt als die adiabatische Kompression erzeugt. Trifft die Schlagkapsel 4 mit dem Schlagbolzen 11 auf die Zündstoffpille 13 auf, die im Druckimpulsverstärkungselement 10 angeordnet ist, so startet die chemische Reaktion, das Druckimpulsverstärkungselement wird gezündet und damit ein zusätzlicher Druckimpuls generiert.

## Patentansprüche

1. Pyrotechnische Trennvorrichtung mit einem Führungsgehäuse (1) in dem ein zu durchtrennendes Teil (2) angeordnet ist, das von einem Trennwerkzeug (3) mit einem Trennmeißel an einer Trennstelle durchtrennbar ausgebildet ist und in der Trennvorrichtung ein eine pyrotechnische Treibladung enthaltener Druckimpulsgenerator (6) zur Generierung eines Druckimpulses zum Antrieb des Trennwerkzeuges (3) angeordnet ist, **dadurch gekennzeichnet, dass** im Führungsgehäuse (1) eine Schlagkapsel (4) zwischen dem Druckimpulsgenerator (6) und dem Trennwerkzeug (3) angeordnet ist, die durch den Druckimpuls des ausgelösten Druckimpulsgenerators (6) auf einen inneren Stoßboden (18) des Trennwerkzeuges (3) an dem zum Trennmeißel entgegengesetzten Ende des Trennwerkzeuges (3) beschleunigbar ist und dass das Trennwerkzeug (3) mit seinem Trennmeißel vor Auftreffen der Schlagkapsel (4) auf den Stoßboden (18) an der Trennstelle anliegt.

2. Trennvorrichtung nach Anspruch 1, **dadurch gekennzeichnet, dass** das Trennwerkzeug (3) und die Schlagkapsel (4) U-förmig ausgebildet sind und die Schlagkapsel (4) innerhalb des Trennwerkzeuges (3) mit Abstand zum Stoßboden (18) angeordnet ist.

3. Trennvorrichtung nach Anspruch 2, **dadurch gekennzeichnet, dass** die Schlagkapsel (4) mit ihrer äußeren Umfangswandung an der inneren Umfangswandung des Trennwerkzeuges (3) verschiebbar anliegt.

4. Trennvorrichtung nach einem der Ansprüche 1 bis 3, **dadurch gekennzeichnet, dass** zwischen dem Stoßboden (18) und der Schlagkapsel (4) ein Kompressionsvolumen (9) angeordnet ist.

5. Trennvorrichtung nach einem der Ansprüche 1 bis 4, **dadurch gekennzeichnet, dass** die Schlagkapsel (4) und das Trennwerkzeug (3) den Druckimpulsgenerator (6) umgreifen, wobei zwischen dem Druckimpulsgenerator (6) und der Schlagkapsel (4) ein Antriebsvolumen (8) angeordnet ist.

6. Trennvorrichtung nach einem der Ansprüche 1 bis 5, **dadurch gekennzeichnet, dass** die Schlagkapsel (4) an ihrem offenen Ende auf der äußeren Umfangswand eine umlaufende Aufweitung (5b) oder zwei oder mehrere nach Außen umgebogene Arretierungszungen (5a) aufweist und das Trennwerkzeug (3) am offenen Ende innen, d.h. auf der inneren Umfangswand eine entsprechend der Aufweitung (5b) oder der Arretierungszungen (5a) geformte umlaufende Phase aufweist.

7. Trennvorrichtung nach einem der Ansprüche 1 bis 6, **dadurch gekennzeichnet, dass** das Trennwerkzeug (3); die Schlagkapsel (4)-und das Führungsgehäuse (1) aus glasfaserverstärktem Kunststoff bestehen.

8. Trennvorrichtung nach einem der vorhergehenden Ansprüche, **dadurch gekennzeichnet, dass** das Massenverhältnis der Schlagkapsel (4) zum Trennwerkzeug (3) bei ca. 1:3 liegt- und/oder das Volumenverhältnis des Antriebsvolumens (8) zum Kompressionsvolumen (9) bei ca. 1:3 liegt.

9. Trennvorrichtung nach einem der Ansprüche 1 bis 8, **dadurch gekennzeichnet, dass** auf dem Stoßboden (18) ein pyrotechnisches Druckimpulsverstärkungselement (10) in der Art einer pyrotechnischen Verstärkungsladung aufgebracht ist.

10. Trennvorrichtung nach Anspruch 9, **dadurch gekennzeichnet, dass** im Druckimpulsverstärkungselement (10) eine Zündeinrichtung, bevorzugt eine Zündstoffpille (13) angeordnet ist.

11. Trennvorrichtung nach Anspruch 9 oder 10, **dadurch gekennzeichnet, dass** die Schlagkapsel (4) an der zum Druckimpulsverstärkungselement (10) oder zur Zündeinrichtung gewandten Seite einen Schlagbolzen (11) aufweist.

12. Trennvorrichtung nach einem der Ansprüche 1 bis 11, **dadurch gekennzeichnet, dass** das zu durchtrennende Teil (2) eine Stromschiene ist.

13. Trennvorrichtung nach einem der Ansprüche 1 bis 12 zur Verwendung in einer Batterieabschaltung bevorzugt in einem Kraftfahrzeug.

## Claims

1. Pyrotechnic cutting device having a guiding housing (1) in which a part (2) to be severed is arranged, which is made severable at a cutting point by a cutting tool (3) having a cutting chisel, and a pressure pulse generator (6) containing a pyrotechnic driving charge is arranged in the cutting device for the generation of a pressure pulse to drive the cutting tool (3), **characterized in that** an impact capsule (4) is arranged in the guiding housing (1) between the pressure pulse generator (6) and the cutting tool (3) and can be accelerated by the pressure pulse of the triggered pressure pulse generator (6) toward an inner thrust base (18) of the cutting tool (3) at the end of the cutting tool (3) opposite to the cutting chisel; and **in that** the cutting chisel of the cutting tool (3) contacts the cutting point before the impact capsule (4) strikes the thrust base (18).

2. Cutting device according to claim 1, **characterized in that** the cutting tool (3) and the impact capsule (4) are of U shape and the impact capsule (4) is arranged spaced apart from the thrust base (18) inside the cutting tool (3).

3. Cutting device according to claim 2, **characterized in that** the outer peripheral wall of the impact capsule (4) slidably contacts the inner peripheral wall of the cutting tool (3).

4. Cutting device according to any one of the claims 1 to 3, **characterized in that** a compression volume (9) is arranged between the thrust base (18) and the impact capsule (4).

5. Cutting device according to any one of the claims 1 to 4, **characterized in that** the impact capsule (4) and the cutting tool (3) engage around the pressure pulse generator (6), with a drive volume (8) being arranged between the pressure pulse generator (6) and the impact capsule (4).

6. Cutting device according to any one of the claims 1 to 5, **characterized in that** the impact capsule (4) has at its open end, on the outer peripheral wall, a circumferential flare (5b) or two or more outwardly bent over restraining tongues (5a), and the cutting tool (3) has a circumferential chamfer shaped in accordance with the flare (5b) or the restraining tongues (5a) on the inside at the open end, i.e. on the inner peripheral wall.

7. Cutting device according to any one of the claims 1 to 6, **characterized in that** the cutting tool (3), the impact capsule (4), and the guiding housing (1) are made of glass-fiber reinforced plastic.

8. Cutting device according to any one of the preceding claims, **characterized in that** the mass ratio of the impact capsule (4) to the cutting tool (3) is approximately 1:3 and/or the volume ratio of the drive volume (8) to the compression volume (9) is approximately 1:3.

9. Cutting device according to any one of the claims 1 to 8, **characterized in that** a pyrotechnic pressure pulse booster element (10) in the manner of a pyrotechnic booster charge is attached to the thrust base (18).

10. Cutting device according to claim 9, **characterized in that** an ignition device, preferably a primer pellet (13), is arranged in the pressure pulse booster element (10).

11. Cutting device according to claim 9 or claim 10, **characterized in that** the impact capsule (4) has a striking pin (11) on the side facing the pressure pulse booster element (10) or the ignition device.

12. Cutting device according to any one of the claims 1 to 11, **characterized in that** the part (2) to be severed is a current bus.

13. Cutting device according to any one of the claims 1 to 12, for use in a battery shutoff, preferably in a motor vehicle.

## Revendications

1. Dispositif de découpe pyrotechnique avec un logement de guidage (1) dans lequel une pièce à découper (2) est agencée, qui est formé de manière sectionnable par un outil de découpe (3) avec un couteau de découpe à une position de découpe et dans le dispositif de découpe est agencé un générateur d'impulsion de pression (6) contenant une charge de propulsion pyrotechnique pour générer une impulsion de pression pour l'entraînement de l'outil de découpe (3), **caractérisé en ce que**, dans le logement de guidage (1) une capsule d'impact (4) est agencée entre le générateur d'impulsion de pression (6) et l'outil de découpe (3), qui peut être accélérée par l'impulsion de pression du générateur d'impulsion de pression (6) activé sur un fond d'impact intérieur (18) de l'outil de découpe (3) à l'extrémité opposée au couteau de découpe de l'outil de découpe (3) et **en ce que** l'outil de découpe (3) avec son couteau de découpe avant l'impact de la capsule d'impact (4) sur le fond d'impact (18) repose sur la position de découpe.

2. Dispositif de découpe selon la revendication 1, **caractérisé en ce que** l'outil de découpe (3) et la capsule d'impact (4) sont conçus en forme de U et la capsule d'impact (4) est agencée à l'intérieur de l'outil de découpe (3) à distance du fond à impact (18).

3. Dispositif de découpe selon la revendication 2, **caractérisé en ce que** la capsule d'impact (4) avec sa paroi périphérique extérieure repose sur la paroi périphérique intérieure de l'outil de découpe (3) de manière mobile.

4. Dispositif de découpe selon l'une quelconque des revendications 1 à 3, **caractérisé en ce que** entre le fond d'impact (18) et la capsule d'impact est agencé un volume de compression (9).

5. Dispositif de découpe selon l'une quelconque des revendications 1 à 4, **caractérisé en ce que** la capsule d'impact (4) et l'outil de découpe (3) enveloppent le générateur d'impulsion de pression (6), dans lequel entre le générateur à impulsion de pression (6) et la capsule d'impact (4) est agencé un volume d'entraînement.

6. Dispositif de découpe selon l'une quelconque des revendications 1 à 5, **caractérisé en ce que** la capsule d'impact (4) présente à son extrémité ouverte sur la paroi périphérique extérieure un évasement circulaire (5b) ou deux ou plusieurs languettes d'arrêt (5a) courbées vers l'extérieur et l'outil de découpe (3) présente à l'intérieur d'une extrémité ouverte, c'est-à-dire sur la paroi périphérique intérieure, une phase entourante formée correspondant à l'évasement (5b) ou à la languette d'arrêt (5a).

7. Dispositif de découpe selon l'une quelconque des revendications 1 à 6, **caractérisé en ce que** l'outil de découpe (3), la capsule d'impact (4) et le logement de guidage (1) sont constitués de matière plastique renforcée par des fibres de verre.

8. Dispositif de découpe selon l'une quelconque des revendications précédentes, **caractérisé en ce que** le rapport en masse de la capsule (4) sur l'outil de découpe (3) est d'environ 1 : 3 et/ou le rapport en volume du volume d'entraînement (8) sur le volume de compression (9) est d'environ 1:3.

9. Dispositif de découpe selon l'une quelconque des revendications 1 à 8, **caractérisé en ce que** sur le fond d'impact (18) un élément de renforcement d'impulsion de pression (10) est placé sous forme d'une charge de renfort pyrotechnique.

10. Dispositif de découpe selon la revendication 9, **caractérisé en ce que** dans l'élément de renforcement d'impulsion de pression (10) est agencé un dispositif d'allumage, de préférence une pastille de matière d'allumage (13).

11. Dispositif de découpe selon la revendication 9 ou 10, **caractérisé en ce que** la capsule d'impact (4) présente un percuteur (11) sur le côté tourné vers dispositif d'allumage ou vers l'élément de renforcement d'impulsion de pression (10).

12. Dispositif de découpe selon l'une quelconque des revendications 1 à 11, **caractérisé en ce que** la pièce à découper (2) est un rail conducteur.

13. Dispositif de découpe selon l'une quelconque des revendications 1 à 12, pour une utilisation dans un coupe circuit de batterie de préférence dans un véhicule automobile.
